# EUROPEAN PATENT SPECIFICATION

(11) **EP 3 764 145 B1**
(45) Date of publication and mention of the grant of the patent: **22.11.2023**
(21) Application number: 20185339.7
(22) Date of filing: 10.07.2020
(51) Int. Cl.: G02B 6/44

(54) **SOCKET DEVICE FOR A FIBER OPTIC NETWORK**
STECKDOSE FÜR FASEROPTISCHES NETZWERK
PRISE POUR RÉSEAU DE DISTRIBUTION À FIBRES OPTIQUES

(30) Priority: 12.07.2019 IT 201900011643
(43) Date of publication of application: 13.01.2021
(73) Proprietor: F.A.I.T. FABBRICA APPARRECCHIATURE PER IMPIANTI DI TELECOMUNICAZIONE - SOCIETA' A RESPONSABILITA' LIMITATA, 00135 Roma (RM) (IT)
(72) Inventor: PUGLIESE, Giovanni, 00135 ROMA (RM) (IT); VENTRELLA, Alfredo, 00135 ROMA (RM) (IT)
(74) Representative: Santi, Filippo

(56) References cited:
- EP-A1- 2 045 636
- EP-A1- 2 980 939
- EP-A2- 2 993 750
- FR-A1- 2 957 155
- US-A- 5 804 765
- US-A- 5 838 858
- US-A1- 2010 310 222

## Description

### Technical field of the invention

The present invention relates to an optical fiber socket device, in particular a fiber optic network termination socket to be installed for example in a user's home and to allow autonomous connection and/or disconnection of an optical fiber connector.

### State of the art

Optical fiber data transfer systems are continuously increasing all over the world.

These systems provide for the transmission of data using coherent light signals transmitted through optical fiber cables which generally comprise a central optical fiber in glass or plastic material, suitable for transmitting the light signal, an internal protective nylon sheath, kevlar fibers used to reinforce the cable, increasing its tensile strength, and an external sheath in plastic or rubber material.

The connections between the terminations of optical fiber cables must be made with great precision to allow the passage of the light signal from one optical fiber to another with the least possible dispersion.

In normal use, optical fiber cables are provided at terminal ends with standard male connectors, so that two cables can be mutually joined by means of a connection element, that is a female-female optical adapter, also of standard type.

These connectors make a direct contact between the ends of two fibers by exerting a force which tends to keep said ends mutually joined.

Optical fibers can be of different types, generally singlemode or multimode, depending on the signal bandwidth to be transmitted and the length of the optical link.

Optical fiber connectors can also be of different types, for example SC or LC or FC or ST or MU or others, depending on the application in which they are to be used.

As is generally the case for other types of systems installed in the known art, even the optical fiber networks generally end with a fixed and well-defined installation which the final user can access simply by connecting via a junction cable generally equipped with a specific connector that it is connected, through the female-female optical adapter, to the connector to which the signals from the network arrive.

The known technique provides various types of user wall plates for optical fiber, which can be recessed or installed on the outside of the walls, with fixed and/or mobile compartments, typically requiring brickwork operations for their installation (such as, for example, making holes in wall or recess of specific boxes).

The wall plates of the known type are generally suitable for use in technical and professional fields, with experienced personnel in the field and in the specific use.

With the diffusion of fiber optic systems in the consumer and non-professional market, the access and use of these systems has expanded to non-technical users and not specifically prepared for proper management and maintenance.

This leads to an increase in the possibility of malfunctions or damage due to incorrect use of optical equipment.

Furthermore, the increase in the market leads to an increase in the demand for installations and therefore a search for simpler and more effective installation methods.

An example of domestic installation, and the diffusion of fiber in homes and offices, is based on FTTH (Fiber To The Home) technology, where SC type connectors are generally used. In particular, in this case there is at least one socket in the end user's reference environment, and a wired and ready-to-use fiber optic connector.

The wall plates of the known type typically have a box-like conformation for containing the cable and a removable front cover resting, or at most snap-inserted, on the walls of the box-like housing.

A first disadvantage of the known type wall plates is that they are particularly bulky also due to the presence of tilting parts, such as housing trays for managing the fiber richness, which also increase the possibility that these devices are installed incorrectly with the consequent need for maintenance or restoration by the supply service.

A further disadvantage of the wall plates of the known type is that the removability of the cover entails, in the event of a trip on the user cable connecting the wall plate to the end user, the risk that the housing cover can be removed, thus leading to discovered the optical fiber on the network side, with consequent possible damage to the system.

A still further disadvantage of known type wall plates is that they require brickwork operations for their installation, such as for example holes in the wall.

A still further disadvantage of known type wall plates is that they are generally provided with easily removable dust caps or tilting doors that can be easily opened even by non-technical personnel who are not aware of the potential health risks deriving from the exposure of the laser signals coming out of the optical connectors. network and user. These risks are increased by the fact that the laser signals are in the range of light not visible to the human eye.

The relevant prior art includes also the patent applications EP 2 980 939 A1 and EP 2 045 636 A1 and document US 5 804 765 A

### Summary of the invention

Therefore, the technical problem posed and solved by the present invention is that of providing a terminal device for an optical fiber network, that is a socket device - or socket - for optical fiber, which allows to overcome the drawbacks mentioned above with reference to the know technique.

This problem is solved by an optical fiber socket device according to claim 1.

Preferred features of the present invention are present in the dependent claims.

The present invention provides some relevant advantages.

In particular, the characteristic of having a reduced protrusion on the wall allows both aesthetic advantages and a reduction of unwanted damage due to involuntary interference with external bodies.

A further advantage is that the device according to the present invention has a single main body and therefore is suitable to be installed quickly even by unskilled workers and without incurring the danger of damage to the optical fiber during installation.

An even further advantage is that the socket device can be installed together with existing sockets using the same wall box, without having to disconnect the existing sockets from their system and without having to do brickwork operations such as new holes for hooking to the wall. This advantage is even more evident when the existing socket is an electrical socket, thus also allowing easy connection to existing current sockets of active equipment, such as a user fiber modem, to which the optical fiber is connected.

An even further advantage is that the user socket holds the cover firmly anchored thanks to the pressure exerted by the screws connecting the frame of the existing socket to the wall box, so as to avoid unwanted opening of the cover if the optical fiber user's cable is accidentally pulled out.

An even further advantage is that the optical fiber can reach the wall box directly through the ducts of other utility, including electrical ones, already existing and pre-installed in the same box.

A still further advantage is that the socket device according to the present invention can be firmly hooked, by means of plastic clamps, to the existing wall box, before the final block with the screws of the frame of the existing socket, in order to simplify the fiber installation phase and avoid damage to the fiber in case of maintenance of the existing sockets.

Other advantages, characteristics and methods of use of the present invention will become evident from the following detailed description of some embodiments, presented by way of non-limiting example.

### Brief description of the figures

Reference will be made to the figures of the attached drawings, in which:
Figure 1 shows a perspective view of an embodiment of the socket device according to the present invention;
Figure 2 shows an exploded view of the socket device of Figure 1;
Figure 2a shows a front view of a detail of Figure 2;
Figure 2b shows a rear view of the detail of Figure 2a;
Figure 3 shows a perspective view from the back of a detail of Figure 2;
Figure 4 shows a front view of a detail of Figure 2;
Figure 5 shows a front view of the detail of Figure 3;
Figure 6 shows an embodiment of the device according to the present invention in an installation step configuration on a pre-existing wall box;
Figure 6a shows an embodiment of the device according to the present invention in a further installation step configuration on a pre-existing wall box;
Figure 6b shows an enlarged detail of the device of Figure 6a;
Figure 7 shows the device of Figure 6a in a further installation step;
Figure 7a shows the device of Figure 7 in an assembly configuration with a pre-existing plate;
Figure 8 shows the device of Figure 7a in a usage configuration and connection of the user-side network cable;
Figure 8a shows a perspective view of an enlarged detail of the device of Figure 8;
Figure 9a shows a top perspective view of a further embodiment of the socket device according to the present invention;
Figure 9b shows an exploded view of the device of Figure 9a;
Figure 10a shows a perspective view from the rear of the device of Figure 9b;
Figure 10b shows a further perspective view from the rear of the detail of Figure 9b.

### Detailed description of preferred embodiments

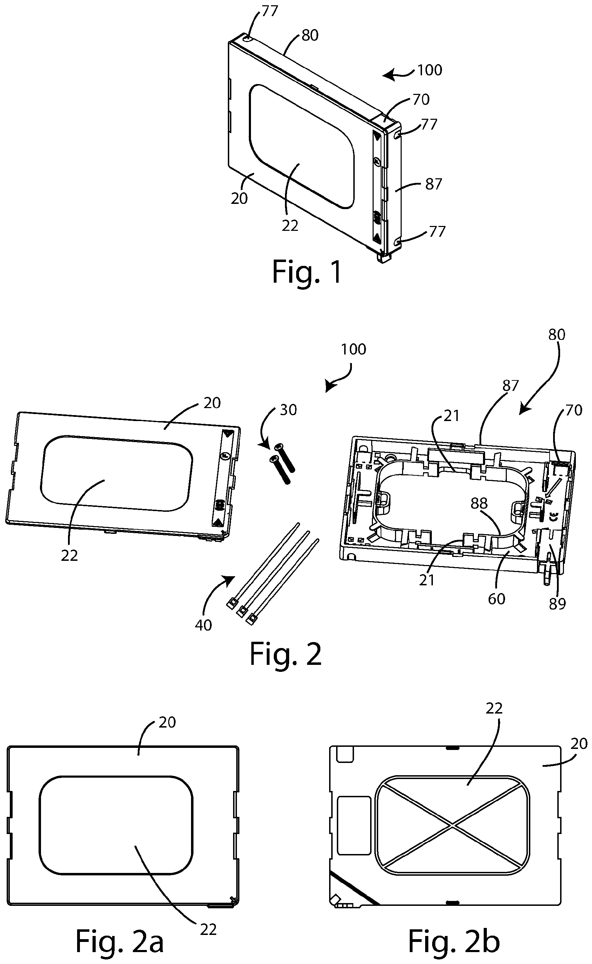

With reference to figures 1 and 2, an optical fiber network socket device according to a first embodiment of the invention is generally denoted with 100.

The socket device 100 of the present example is configured to provide an optical fiber network termination and to allow the optical connection of a user cable to the network.

As shown, the device 100 comprises a casing 80 which defines a housing compartment for housing an end portion of the network cable.

The casing 80, preferably box-shaped, has a substantially planar base 60, external containment side walls 87 and internal containment side walls 88. The device 100 also comprises a closing element 20, shaped to be coupled to the casing 80, for example on a front area opposite the base 60, in such a way as to close the housing compartment.

Alternative embodiments may provide that the casing has a different shape from that shown in the figure, for example a circular, oval, square, or more generally polygonal shape, depending on the specific installation needs of the network socket.

As shown in the figures, the base 60 has a central opening A delimited by the internal containment side walls 88 of the casing 80.

The opening A is shaped to allow the passage of a network cable.

In particular, when the device is installed at a pre-existing wall box, which provides a T frame with any pre-existing sockets, the device is in an intermediate position between the support frame for the sockets and / or switches and the wall box.

The opening A is also shaped to allow the passage of the terminal portion of the network cable, for example in the case of an existing wall box when the network cable comes from ducts that reach the pre-existing wall box.

As shown in figures 1 to 4, the external side walls 87 of the casing 80 have at least a removable portion 70, shaped to allow the connection between one end, also pre-connectorized, of the network terminal cable and a user cable external to the device through the use of an SC female-female optical adapter 89, according with the international regulatory requirements for terminations of optical networks with FTTH architecture.

Advantageously, the socket device 100 also comprises retaining means 17, 27, 37, 47 positioned in the housing compartment to direct and/or retain the end portion of the network cable and/or the respective adapters and/or optical joints, as described better below.

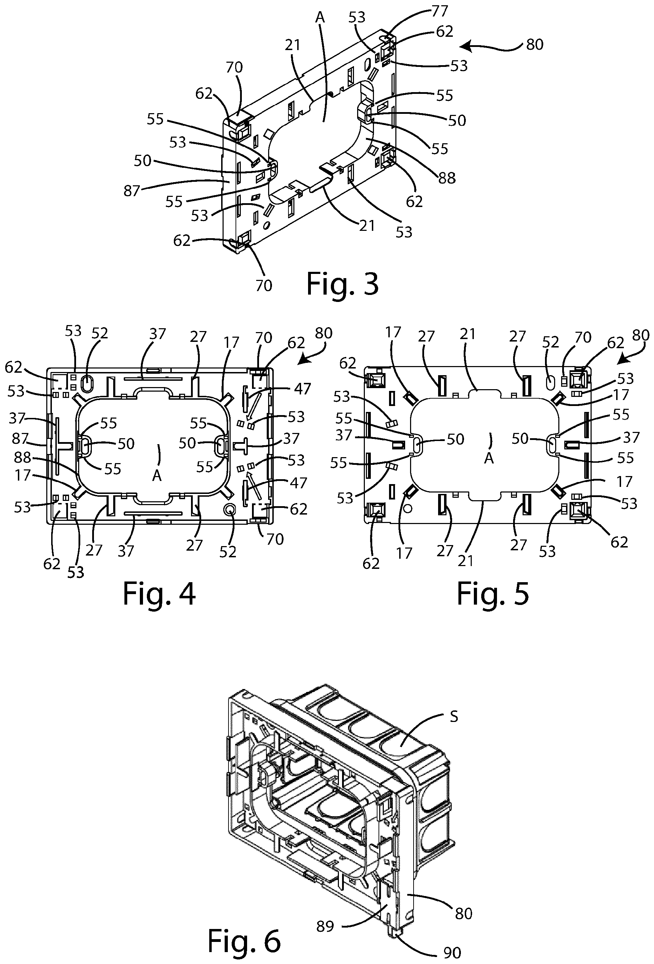

In particular, as shown in figure 4, the retaining means comprises containment tabs 17, 27 of the terminal portion of the network cable, positioned at an upper end edge of the side containment walls 88. As shown in figure 4, the containment tabs extend in a direction substantially parallel to the base of the device in such a way as to constrain the network cable and keep it inside the housing compartment. The containment tabs 17, 27 can be coupled both to the external side walls 87 and to the internal ones 88.

Preferably, the retaining means comprises at least one planar separating element 37, 47, constrained to the base 60, shaped to divide the housing compartment.

In particular, as shown in figures 2 and 4, the separation element 37 defines a housing for an optical fiber joint (not shown) possibly present in the network termination wall plate.

In particular, as shown in figures 2 and 4, the separation element 47 defines a housing for a female-female optical adapter to which the optical connector at the end of the network cable is connected.

Advantageously, the external side wall 87 comprises at least a removable portion 70, in particular positioned at the aforementioned housing for the female-female optical adapter connected to one end of the network cable in such a way as to allow, during use of the device socket, the connection of a cable on the user side through the insertion of the male connector into the female-female adapter positioned inside the device through an opening made by the removal of the portion 70. Furthermore, further removable portions 77 of the side walls are provided external 87 and / or removable windows 62 on the base 60 of the casing, to allow the entry of a network cable, even pre-connectorized, in the event that the network cable has been installed on the surface of the supporting wall of the device itself.

Advantageously, as shown in figures 3, 4 and 5, the base 60 comprises at least one recess 21 at one or more edges of the opening A.

The recess 21, made along the internal side wall 88, is configured to guide the entry inside the device of a network cable from an internal position to a supporting wall of the device itself, in particular when the socket device is mounted at an existing recessed box (S) where the optical network cable arrives.

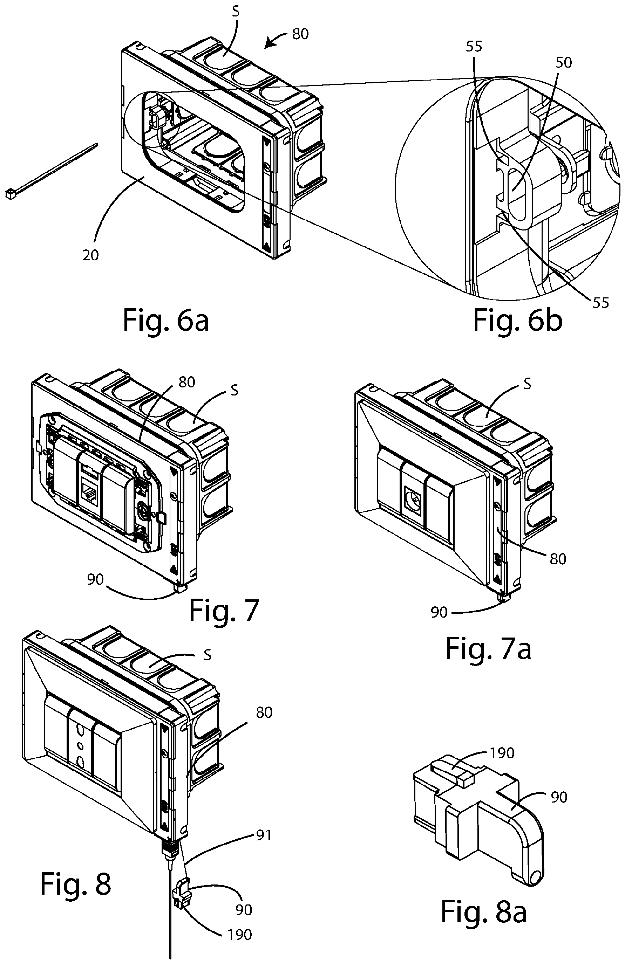

The provision of the recess 21 guarantees the repositioning of the frame (T) of a pre-existing socket (as shown for example in figures 7 and 8) in the compartment defined by the opening A, without causing any physical interference between the optical cable and the frame itself.

To ensure its fastening to a pre-existing recessed box, the device 100 provides a fastening, or hooking, protuberance 50.

As shown in figures 2, 4, 6, 6a and 6b, for example two protrusions 50 are provided, positioned on the internal side wall 88 at mechanical coupling elements for the frame of the pre-existing flush-mounted box.

Each protuberance 50 is projected towards the interior of the opening A, or into the opening A, and is configured to house fastening means 30, 40.

Each protuberance 50 comprises a main slot for the insertion of a threaded fastening means, for example the same screw for hooking the pre-existing frame to the pre-existing recessed box, if the device is installed in an intermediate position thereto, such as shown in figure 7.

Each protuberance 50 further comprises at least two secondary slots 55 for the insertion of an adjustable fastening element, for example a clamp. Advantageously, the use of adjustable clamps and the provision of specially sized slots to allow the insertion of these clamps, facilitates the connection operations of the network cable for an operator both during installation and maintenance of the socket device. As shown in figures 1 and 2, the closing element 20 of the device 100 comprises a removable portion 22. In an assembled configuration of the device, as shown in figure 6, the removable portion is positioned at the opening A. In this way advantageously, the socket device 100 can be mounted at an already existing recessed box and allows, by removing the removable portion 22, the repositioning of the frame and of the pre-existing sockets and / or switches in a position coupled to the closing element 20 as shown in figures 7, 7a and 8.

An advantage of the socket device 100 according to the present invention is that it can be easily installed even on a wall without a pre-existing recessed box. In fact, in addition to the removable portions 77 of the external side walls 87 as anticipated above, the casing 80 has one or more slots 52 positioned on the base 60 to allow the insertion of fastening means, for example fastening screws, of the device 100 to the wall.

Advantageously, as shown in figure 4, further openings 53 are also provided which allow the insertion of an adjustable fastening element, for example a clamp, to constrain the optical cable to the casing 80 and prevent it from coming out following an involuntary stress by an inexperienced user, for example a child.

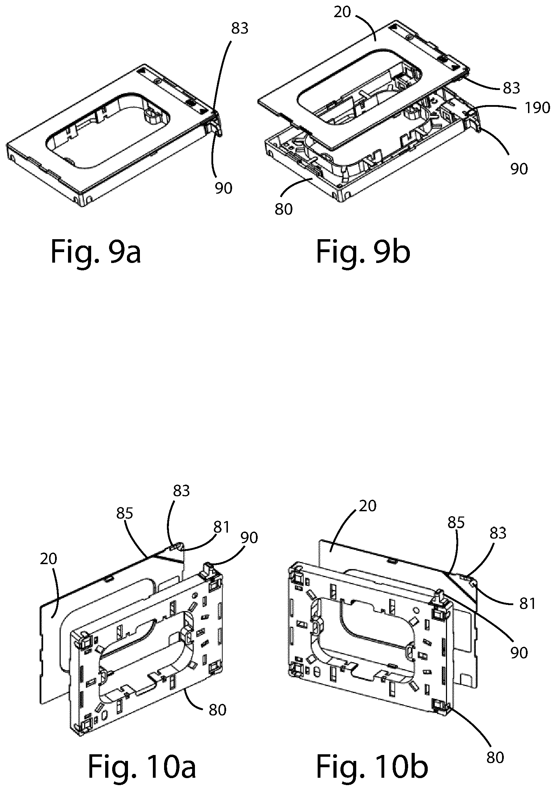

Furthermore, to prevent an inexperienced user from extracting the SC male connector of the optical user cable from the female-female adapter 89 also of the SC type installed in the device, the socket device 100 described herein has safety means. In particular, as shown in figures 9a, 9b, 10a and 10b, the safety means comprises one or more locking projections 83, or teeths, made at a perimetral edge of the closing element 20 and positioned and sized to interfere with a reference protuberance P provided on the standard SC type male connector which acts as a key for inserting the same SC male connector into the female-female adapter.

In particular, the safety means further comprise one or more recesses 81 made in proximity of the one or more protrusions 83 shaped to house a lever element, for example one end of a screwdriver, and to allow lifting, by an authorized user, of a locking portion of the closing element 20.

To facilitate the lifting of the locking portion of the closing element 20, as shown in figures 10a and 10b, a discharge notch 85 is provided, for example made at a corner of the closing element 20 to allow the lifting of the locking portion positioned to cover the connector.

Advantageously, the invention according to the present invention also relates to a kit comprising at least one socket device 100 as described above, one or more female-female optical adapters 89 and at least one safety plug 90 for each female-female optical adapter 89 .

As shown in figures 7, 7a, 8, and in figures 9a to 10b, the plug 90 is inserted into the housing of the female-female optical adapter 89, in such a way as to avoid the entry of dust or unwanted objects into the female-female adapter 89.

In particular, the closing plug 90 includes a reference protuberance 190 sized to slide in the slot of the female-female adapter.

Preferably, the protuberance 190 is dimensionally similar and conforms to the protuberance P provided on the standard connector SC.

When the socket device is to be used to allow an optical connection, the plug 90 is removed to allow the insertion of the SC connector of the user-side fiber optic cable.

The safety plug 90 is configured to interfere with one or more protrusions 83 provided on the cover 20, so that it cannot be removed unintentionally without the use of a tool.

Preferably, as shown in figure 8, the plug 90 is connected to the casing by means of a loss-proof connection strap 91 in such a way that, in a phase of use of the socket device, the user can remove the plug 90 and insert the network cable for an optical connection and at the same time proceed with the reverse operations, reinserting the plug 90 in its seat.

The kit can be supplied including threaded fastening means 30, for example screws, and one or more adjustable fastening elements 40, for example one or more clamps.

The present invention has been described with reference to preferred embodiments. It is to be understood that there may be other embodiments that refer to the same inventive core, as defined by the scope of protection of the claims set out below.

## Claims

1. A socket device (100) for a fiber optic network, configured to be positioned at a wall box having a fiber optic network terminal to allow the optical connection of a user cable to the network, said device comprising:
- a casing (80) which defines a housing compartment for housing an end portion of the network cable, said casing (80) having a substantially planar base (60), external containment side walls (87) and internal containment side walls (88);
- a closing element (20) shaped to be coupled to said casing (80) so as to close said housing compartment;
wherein said internal containment side walls (88) delimit an opening (A) of said base (60), said opening (A) being shaped to allow the passage of a network cable, wherein said external containment side walls (87) provide at least one removable portion (70) shaped to allow connection between a pre-connected end of the network terminal cable and an user cable external to the device,
wherein said socket device (100) for a fiber optic network comprises at least one protuberance (50) positioned on said internal side walls (88), at mechanical coupling elements for a frame of the wall box, said protuberance (50) projecting into said opening (A) and being configured to house fixing means (30, 40), wherein said protuberance (50) comprises a main slot for inserting a threaded fixing means, optionally a screw, and at least two secondary slots (55) for the insertion of an adjustable fastening element, optionally a clamp element.

2. Socket device (100) according to the preceding claim, wherein said base (60) comprises at least one recess (21) at an edge of said opening (A) configured to guide the entrance inside the device of the network cable from an internal position of the device supporting wall.

3. Socket device (100) according to any one of the preceding claims, further comprising retaining means (17, 27, 37, 47) positioned in said housing compartment to guide and/or retain an end portion of the network cable and/or the respective female-female adapters and/or the optical couplers.

4. Socket device (100) according to the preceding claim, wherein said retaining means comprises containment tabs (17, 27) for containing the end portion of the network cable, positioned at an upper end edge of said containment side walls (87, 88).

5. Socket device (100) according to one of claims 3 or 4, wherein said retaining means comprises at least one planar separating element (37, 47) fixed to said base (60) shaped to divide said housing compartment, said separating element (47) defining a housing for a female-female optical adapter at the end of the network cable.

6. Socket device (100) according to any one of the preceding claims, wherein said base (60) of said casing (80) comprises at least one removable window (62) to allow the insertion of the network cable, also pre-connected, into the device, from an external position of the device supporting wall.

7. Socket device (100) according to any one of the preceding claims, wherein said external side walls (87) comprise further removable portions (77) configured to allow the insertion of the network cable from an external position of the device supporting wall.

8. Socket device (100) according to any one of the preceding claims, wherein said closing element (20) comprises a removable portion (22), said removable portion being positioned at said opening (A) in an assembled configuration of the device.

9. Socket device (100) according to any one of the preceding claims, comprising safety means comprising one or more locking projections (83) provided at a peripheral edge of said closing element (20) and sized to interfere with the exit of an SC optical connector or a plug (90), from a female-female SC optical adapter (89) installed in the socket device (100).

10. Socket device (100) according to the preceding claim, wherein said safety means comprises one or more recesses (81) provided on said closing element (20) near said one or more projections (83) for the insertion of a tool to solve the interference in order to allow the exit of an optical connector from the socket device.

11. Kit comprising at least one socket device (100) according to one of claims 1 to 10, one or more female-female optical adapters (89) and at least one safety plug (90) for each female-female optical adapter (89).

## Patentansprüche

1. Steckdosenvorrichtung (100) für ein faseroptisches Netzwerk, die konfiguriert ist, um an einer Wanddose mit einem faseroptischen Netzwerkanschluss positioniert zu werden, um die optische Verbindung eines Benutzerkabels mit dem Netzwerk zu ermöglichen, die Vorrichtung umfassend:
- ein Gehäuse (80), dass ein Gehäusefach zum Aufnehmen eines Endabschnitts des Netzwerkkabels definiert, wobei das Gehäuse (80) eine im Wesentlichen ebene Basis (60), äußere Aufnahmeseitenwände (87) und innere Aufnahmeseitenwände (88) aufweist;
- ein Verschlusselement (20), dass geformt ist, um mit dem Gehäuse (80) gekoppelt zu werden, um das Gehäusefach zu schließen; wobei die inneren Aufnahmeseitenwände (88) eine Öffnung (A) der Basis (60) begrenzen, wobei die Öffnung (A) geformt ist, um den Durchgang eines Netzwerkkabels zu ermöglichen, wobei die äußeren Aufnahmeseitenwände (87) mindestens einen abnehmbaren Abschnitt (70) bereitstellen, der geformt ist, um eine Verbindung zwischen einem vorangeschlossenen Ende des Netzwerkanschlusskabels und einem Benutzerkabel außerhalb der Vorrichtung zu ermöglichen, wobei die Steckdosenvorrichtung (100) für ein faseroptisches Netzwerk mindestens einen Vorsprung (50) umfasst, der an den inneren Seitenwänden (88) positioniert ist, an mechanischen Kopplungselementen für einen Rahmen des Wandkastens, wobei der Vorsprung (50) in die Öffnung (A) hervorsteht und konfiguriert ist, um Befestigungseinrichtungen (30, 40) aufzunehmen, wobei der Vorsprung (50) einen Hauptschlitz zum Einführen einer mit Gewinde versehenen Befestigungseinrichtung, optional eine Schraube, und mindestens zwei sekundäre Schlitze (55) zum Einführen eines einstellbaren Befestigungselements, optional ein Klemmelement, aufweist.

2. Steckdosenvorrichtung (100) nach dem vorherigen Anspruch, wobei die Basis (60) mindestens eine Aussparung (21) an einer Kante der Öffnung (A) aufweist, die konfiguriert ist, um den Eintritt des Netzwerkkabels in das Innere der Vorrichtung von einer inneren Position der Vorrichtungsträgerwand zu leiten.

3. Steckdosenvorrichtung (100) nach einem der vorherigen Ansprüche, ferner umfassend Halteeinrichtungen (17, 27, 37, 47), die in dem Gehäusefach angeordnet sind, um einen Endabschnitt des Netzwerkkabels und/oder der jeweiligen Buchsen-Buchsen-Adapter und/oder der optischen Koppler zu führen und/oder zu halten.

4. Steckdosenvorrichtung (100) nach dem vorherigen Anspruch, wobei die Halteeinrichtungen Haltelaschen (17, 27) zum Aufnehmen des Endabschnitts des Netzwerkkabels umfassen, die an einer oberen Endkante der Aufnahmeseitenwände (87, 88) angeordnet sind.

5. Steckdosenvorrichtung (100) nach einem der Ansprüche 3 oder 4, wobei die Halteeinrichtungen mindestens ein ebenes Trennelement (37, 47) umfassen, dass an der Basis (60) befestigt ist und geformt ist, um das Gehäusefach zu unterteilen, wobei das Trennelement (47) ein Gehäuse für einen optischen Buchsen-Buchsen-Adapter am Ende des Netzwerkkabels definiert.

6. Steckdosenvorrichtung (100) nach einem der vorherigen Ansprüche, wobei die Basis (60) des Gehäuses (80) mindestens ein abnehmbares Fenster (62) aufweist, um das Einführen des ebenfalls vorangeschlossenen Netzwerkkabels in die Vorrichtung von einer äußeren Position der Vorrichtungsträgerwand zu ermöglichen.

7. Steckdosenvorrichtung (100) nach einem der vorherigen Ansprüche, wobei die äußeren Seitenwände (87) weitere abnehmbare Abschnitte (77) umfassen, die konfiguriert sind, um das Einführen des Netzwerkkabels von einer äußeren Position der Vorrichtungsträgerwand zu ermöglichen.

8. Steckdosenvorrichtung (100) nach einem der vorherigen Ansprüche, wobei das Verschlusselement (20) einen abnehmbaren Abschnitt (22) umfasst, wobei der abnehmbare Abschnitt in einer zusammengebauten Konfiguration der Vorrichtung an der Öffnung (A) angeordnet ist.

9. Buchsenvorrichtung (100) nach einem der vorherigen Ansprüche, umfassend Sicherheitseinrichtungen, umfassend einen oder mehrere Verriegelungsvorsprünge (83), die an einem Umfangsrand des Verschlusselements (20) bereitgestellt und bemessen sind, um den Austritt eines optischen SC-Verbinders oder eines Steckers (90) aus einem optischen SC-Buchsenadapter (89), der in der Buchsenvorrichtung (100) installiert ist, zu hindern.

10. Buchsenvorrichtung (100) nach dem vorherigen Anspruch, wobei die Sicherheitseinrichtungen eine oder mehrere Aussparungen (81) umfasst, die an dem Verschlusselement (20) in der Nähe des einen oder der mehreren Vorsprünge (83) für das Einführen eines Werkzeugs zum Lösen der Störung bereitgestellt sind, um den Austritt eines optischen Steckers aus der Buchsenvorrichtung zu ermöglichen.

11. Kit, umfassend mindestens eine Buchsenvorrichtung (100) nach einem der Ansprüche 1 bis 10, einen oder mehrere optische Buchsen-Buchsen-Adapter (89) und mindestens einen Sicherheitsstecker (90) für jeden optischen Buchsen-Buchsen-Adapter (89).

## Revendications

1. Un dispositif de prise (100) pour un réseau à fibres optiques, configurées pour être positionnées sur un boîtier mural ayant un terminal de réseau à fibres optiques pour permettre la connexion optique d'un câble utilisateur au réseau, ledit dispositif comprenant :
- un boîtier (80) qui définit un compartiment de logement pour loger une partie terminale du câble de réseau, ledit boîtier (80) ayant une base sensiblement plane (60), des parois latérales de confinement externes (87) et des parois latérales de confinement internes (88);
- un élément de fermeture (20) conçu pour être couplé à ladite enveloppe (80) de manière à fermer ledit compartiment du logement;
dans laquelle lesdites parois latérales internes de confinement (88) délimitent une ouverture (A) de ladite base (60), ladite ouverture (A) étant façonnée pour permettre le passage d'un câble de réseau, dans laquelle lesdites parois latérales externes de confinement (87) fournissent au moins une partie amovible (70) façonnée pour permettre la connexion entre une extrémité préconnectée du câble terminal de réseau et un câble utilisateur externe au dispositif, dans laquelle ledit dispositif de prise (100) pour un réseau à fibre optique comprend au moins une protubérance (50) positionnée sur lesdites parois latérales internes (88), au niveau des éléments de couplage mécanique pour un cadre de la boîte murale, ladite protubérance (50) faisant saillie dans ladite ouverture (A) et étant configurée pour loger des moyens de fixation (30, 40), ladite protubérance (50) comprenant une fente principale pour l'insertion d'un moyen de fixation fileté, éventuellement une vis, et au moins deux fentes secondaires (55) pour l'insertion d'un élément de fixation ajustable, éventuellement un élément de serrage.

2. Un dispositif de prise (100) selon la revendication précédente, dans lequel ladite base (60) comprend au moins un renfoncement (21) à un bord de ladite ouverture (A) configuré pour guider l'entrée à l'intérieur du dispositif du câble de réseau à partir d'une position interne de la paroi de support du dispositif.

3. Un dispositif de prise (100) selon l'une quelconque des revendications précédentes, comprenant en outre des moyens de retenue (17, 27, 37, 47) positionnés dans ledit compartiment du boîtier pour guider et/ou retenir une partie terminale du câble de réseau et/ou les adaptateurs femelle-femelle respectifs et/ou les coupleurs optiques.

4. Un dispositif de prise (100) selon la revendication précédente, dans lequel lesdits moyens de retenue comprennent des languettes de confinement (17, 27) pour contenir la partie terminale du câble de réseau, positionnées à un bord d'extrémité supérieur desdites parois latérales de confinement (87, 88).

5. Un dispositif de prise (100) selon l'une des revendications 3 ou 4, dans lequel lesdits moyens de retenue comprennent au moins un élément de séparation planaire (37, 47) fixé à ladite base (60) et formé pour diviser ledit compartiment de boîtier, ledit élément de séparation (47) définissant un boîtier pour un adaptateur optique femelle-femelle à l'extrémité du câble de réseau.

6. Le dispositif de prise (100) selon l'une quelconque des revendications précédentes, dans lequel ladite base (60) dudit boîtier (80) comprend au moins une fenêtre amovible (62) pour permettre l'insertion du câble réseau, également préconnecté, dans le dispositif, à partir d'une position externe de la paroi de support du dispositif.

7. Un dispositif de prise (100) selon l'une quelconque des revendications précédentes, dans lequel lesdites parois latérales externes (87) comprennent d'autres parties amovibles (77) configurées pour permettre l'insertion du câble réseau à partir d'une position externe de la paroi de support du dispositif.

8. Un dispositif de prise (100) selon l'une quelconque des revendications précédentes, dans lequel ledit élément de fermeture (20) comprend une partie amovible (22), ladite partie amovible étant positionnée au niveau de ladite ouverture (A) dans une configuration assemblée du dispositif.

9. Un dispositif de prise (100) selon l'une quelconque des revendications précédentes, comportant des moyens de sécurité comprenant une ou plusieurs saillies de verrouillage (83) prévues sur un bord périphérique dudit élément de fermeture (20) et dimensionnées pour interférer avec la sortie d'un connecteur optique SC ou d'une fiche (90), à partir d'un adaptateur optique SC femelle-femelle (89) installée dans le dispositif de prise (100).

10. Un dispositif de prise (100) selon la revendication précédente, dans lequel ledit moyen de sécurité comprend un ou plusieurs évidements (81) prévus sur ledit élément de fermeture (20) à proximité de ladite ou desdites saillies (83) pour l'insertion d'un outil permettant de résoudre l'interférence afin de permettre la sortie d'un connecteur optique du dispositif de prise.

11. Un kit comprenant au moins un dispositif de prise (100) selon l'une des revendications 1 à 10, un ou plusieurs adaptateurs optiques femelles-femelle (89) et au moins un bouchon de sécurité (90) pour chaque adaptateur optique femelle-femelle (89).
